# EUROPÄISCHE PATENTSCHRIFT

(11) **EP 1 094 218 B1**
(45) Veröffentlichungstag und Bekanntmachung des Hinweises auf die Patenterteilung: **21.05.2003**
(21) Anmeldenummer: 00119463.8
(22) Anmeldetag: 15.09.2000
(51) Int. Cl.: F02N 11/04, H02K 7/00

(54) **Antriebsvorrichtung**
Drive device
Dispositif d'entraînement

(30) Priorität: 22.10.1999 DE 19951025
(43) Veröffentlichungstag der Anmeldung: 25.04.2001
(73) Patentinhaber: Volkswagen Aktiengesellschaft, 38436 Wolfsburg (DE)
(72) Erfinder: Rennert, Ingo, 38539 Müden/Aller (DE); Revermann, Klaus, 38165 Lehre/Gr. Brunsrode (DE)
(74) Vertreter: Banzer, Hans-Jörg, Dipl.-Ing.

(56) Entgegenhaltungen:
- WO-A-98/05882
- US-A- 5 884 735

## Beschreibung

Die vorliegende Erfindung betrifft eine Antriebsvorrichtung mit einer elektrischen Maschine nach dem Oberbegriff des Anspruches 1. Insbesondere betrifft die vorliegende Erfindung eine Antriebsvorrichtung für ein Kraftfahrzeug, welche eine in Form einer Starter/Generator-Einheit ausgestaltete elektrische Maschine aufweist.

Starter/Generator-Systeme sind weitläufig bekannt und ermöglichen einerseits einen schnelleren und leiseren Start des damit gekoppelten Antriebsmotors und andererseits eine hohe Generatorleistung, um Energie für bestimmte Verbraucher des Kraftfahrzeugs bereitzustellen.

Zur Ausgestaltung derartiger Starter/Generator-Systeme sind unterschiedliche Varianten bekannt.

Eine erste Variante sieht die Verwendung eines parallel zu der Antriebswelle des Antriebsmotors angeordneten Klauenpolgenerators vor, wobei der Klauenpolgenerator über einen Riemen mit dem Antriebsmotor gekoppelt ist. Gemäß einer weiteren Variante wird als Starter/Generator-Einheit eine schwungnutzende Doppelkupplungsmaschine mit mechanischem Energiespeicher verwendet.

Den beiden zuvor genannten Varianten ist gemeinsam, daß die Starter/Generator-Einheit getrennt von der Antriebswelle des Antriebsmotors vorgesehen ist Bei einer dritten Variante, die einer Antriebsvorrichtung nach dem Oberbegriff des Anspruches 1 entspricht, ist hingegen die (auch als Kurbelwellenstartergenerator bezeichnete) Starter/Generator-Einheit auf der Antriebswelle vorgesehen.

Der grundsätzliche Aufbau einer derartigen Antriebsvorrichtung mit einer auf der Antriebswelle angeordneten Starter/Generator-Einheit kann beispielsweise den Druckschriften WO 98/05882, DE 196 16 504 A1, DE 196 32 074 A1 oder DE 43 36 162 A1 entnommen werden. Dabei ist in der WO 98/05882 eine Antriebsvorrichtung mit den Merkmalen des Oberbegriffs des Anspruchs 1 bekannt. Bei diesen bekannten Antriebsvorrichtungen wird als Antriebsaggregat ein Verbrennungsmotor verwendet, dessen Kurbelwelle mit einer als Starter/Generator-Einheit dienenden elektrischen Maschine verbunden ist. Die elektrische Maschine umfaßt einen Rotor und einen den Rotor umgebenden Stator, wobei die Wicklungen des Stators über einen Wechselrichter mit der Kraftfahrzeugbatterie verbunden sind. Der Rotor der elektrischen Maschine steht abtriebsseitig über eine Getriebekupplung bzw. einem hydraulischen Wandler mit der Getriebeeingangswelle eines Getriebes in Verbindung.

Bei diesen bekannten gattungsgemäßen Antriebsvorrichtungen ist die auf der Kurbelwelle befindliche Starter/Generator-Einheit zwischen dem Verbrennungsmotor und dem Getriebe angeordnet. Die als Starter/Generator-Einheit dienende elektrische Maschine wird in zwei unterschiedlichen Betriebsmodi betrieben. In einem Motorbetrieb übernimmt die elektrische Maschine bei Betätigen des Anlasserschlüssels die Funktion eines Anlassers oder Motors zum Starten des Verbrennungsmotors. Hierzu werden den Statorwicklungen entsprechende Erregerströme derart zugeführt, daß der Rotor mit einem Anlaufdrehmoment beaufschlagt wird, welches das Starten des Verbrennungsmotors ermöglicht. Nach dem Starten des Verbrennungsmotors arbeitet die elektrische Maschine im Generatorbetrieb, in dem der Rotor über die Kurbelwelle des Verbrennungsmotors in Rotation versetzt und somit in den Statorwicklungen eine Spannung induziert wird, welche beispielsweise zur Energieversorgung des Bordnetzes bzw. der daran angeschlossenen Verbraucher des Kraftfahrzeuges dient.

Aufgrund der während des Betriebs dieser Antriebsvorrichtungen wirkenden Gas- und Massekräfte ist eine Dämpfung der während des Betriebs auftretenden Kurbelwellenschwingungen erforderlich, da das hohe Massenträgheitsmoment derartiger Kurbelwellenmaschinen aufgrund des erforderlichen großen Rotordurchmessers stark auf die Kurbelwelle rückwirken kann, was wiederum insbesondere bei gleichen Eigenfrequenzen von Kurbelwelle und Rotor zu Resonanzen und gegebenenfalls zur Zerstörung der Kurbelwelle führen kann. Im Zusammenhang mit den zuvor beschriebenen gattungsgemäßen Antriebsvorrichtungen ist zwar bereits die Verwendung eines sogenannten Zweimassenschwungrads bekannt, welches jedoch zwischen der Kurbelwelle und der Getriebeeingangswelle des Getriebes angeordnet und lediglich zur Beruhigung der Getriebeeingangswelle vorgesehen ist. Ein Dämpfen der Drehschwingungen der Kurbelwelle ist mit diesem Zweimassenschwungrad nicht möglich.

Der vorliegenden Erfindung liegt daher die Aufgabe zugrunde, eine gattungsgemäße Antriebsvorrichtung mit einer auf einer Antriebswelle eines Antriebsaggregats angeordneten elektrischen Maschine bereitzustellen, bei der Drehschwingungen der Antriebswelle zuverlässig unterdrückt werden können.

Diese Aufgabe wird gemäß der vorliegenden Erfindung durch eine Antriebsvorrichtung mit den Merkmalen des Anspruches 1 gelöst. Die Unteransprüche definieren jeweils bevorzugte und vorteilhafte Ausführungsformen der vorliegenden Erfindung.

Die erfindungsgemäße Antriebsvorrichtung umfaßt ein Antriebsaggregat sowie eine elektrische Maschine mit einem Stator und einem auf der Antriebswelle des Antriebsaggregats angeordneten Rotor, wobei zur Bedämpfung bzw. zum Tilgem von Schwingungen der Antriebswelle im inneren Bereich des Rotors ein mechanisches drehzahladaptives Tilgersystem angeordnet ist.

Dieses drehzahladaptive Tilgersystem kann insbesondere derart ausgestaltet sein, daß es mehrere Tilgergewichte umfaßt, welche jeweils in Übereinstimmung mit dem physikalischen Prinzip eines im Fliehkraftfeld aufgehängten Pendels gleitend gelagert werden.

Mit Hilfe eines derartigen drehzahladaptiven Tilgersystems kann eine hohe Tilgerfähigkeit erzielt werden. Insbesondere arbeitet das drehzahladaptive Tilgersystem auch noch dann zuverlässig, wenn beispielsweise eine zusätzlich vorgesehene elektrische Dämpfung keine ausreichende Dämpfungsleistung mehr bringen kann (z.B. in einem Feldschwächebereich der elektrischen Maschine).

Der drehzahladaptive Tilger kann auch mit weiteren Dämpfungsmaßnahmen, wie beispielsweise der bereits erwähnten aktiven elektrischen Dämpfung oder einer im inneren Bereich des Rotors elastisch, d.h. federnd aufgehängten ringförmigen Masse etc. kombiniert werden, um somit die Zuverlässigkeit der Dämpfung von Schwingungen der Antriebswelle weiter zu verbessern.

Vorteilhafterweise kann die vorliegende Erfindung in einer elektrischen Maschine angewendet werden, welche an der Antriebswelle auf der der Abtriebsseite gegenüberliegenden Seite des Antriebsaggregats angeordnet ist. Eine derartige Anordnung der elektrischen Maschine besitzt verschiedene Vorteile. So wird auf diese Weise die Anordnung der elektrischen Maschine auf der Antriebswelle ohne Änderungen am Antriebsaggregat, am Getriebe oder an den Montagevorrichtungen ermöglicht, wobei kein zusätzlicher Bauraum benötigt wird. Insbesondere läßt sich diese Anordnung ohne wesentliche axiale Verlängerung des Gesamtsystems realisieren. Des weiteren ist diese Anordnung äußerst kundendienstfreundlich, da die elektrische Maschine leicht von außen zugänglich ist. Darüber hinaus können komplizierte und demzufolge anfällige Zwischengetriebe vermieden werden. Der üblicherweise auf derjenigen Seite der Antriebswelle, auf welcher gemäß dieser Ausgestaltung die elektrische Maschine angeordnet ist, befindliche Riementrieb zur Betätigung beispielsweise des Klimakompressors, der Lenkhilfepumpe usw. eines Kraftfahrzeugs kann entfallen, wenn die mit dem Riemen üblicherweise betätigten Aggregate elektrifiziert werden und beispielsweise im Generatorbetrieb direkt von der elektrischen Maschine mit Energie versorgt werden. Unter Berücksichtigung sämtlicher Aspekte handelt es sich um die kostengünstigste Variante, um die elektrische Maschine auf der Antriebswelle anzuordnen. Gerade bei dieser Anordnung der elektrischen Maschine auf der der Abtriebsseite gegenüberliegenden Seite des Antriebsaggregats ist jedoch eine äußerst zuverlässige Dämpfung von Kurbelwellenschwingungen erforderlich, da das hohe Massenträgheitsmoment der elektrischen Maschine aufgrund des erforderlichen großen Rotordurchmesser auf die Antriebswelle rückwirken kann, so daß bei dieser Ausgestaltung die Wirkungen der vorliegenden Erfindung bzw. des drehzahladaptiven Tilgers besonders vorteilhaft sind.

Die Erfindung kann insbesondere auf als Starter/Generator-Einheiten eines Kraftfahrzeugs ausgestaltete elektrische Maschinen angewendet worden, ohne jedoch darauf beschränkt zu sein.

Die Erfindung wird nachfolgend unter Bezugnahme auf die Zeichnung anhand eines bevorzugten Ausführungsbeispiels beschrieben.
Fig. 1 zeigt schematisch den Aufbau einer erfindungsgemäßen Antriebsvorrichtung in Form eines Blockschaltbilds, und
Fig. 2 zeigt eine mögliche Ausgestaltung eines in Fig. 1 dargestellten drehzahladaptiven Tilgers.

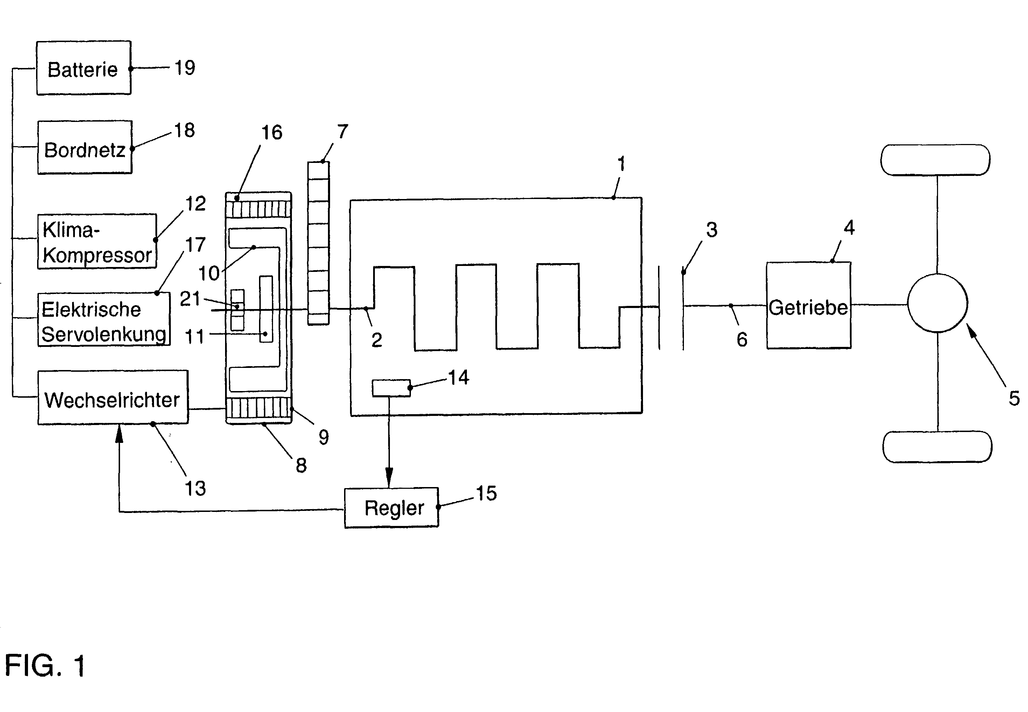

In Fig. 1 ist ein Verbrennungsmotor 1 eines Kraftfahrzeugs dargestellt, über dessen von den Kolben des Verbrennungsmotors 1 angetriebene Kurbelwelle 2 ein Drehmoment über eine Getriebekupplung (bzw. über einen Wandler bei einem Automatikgetriebe) auf die Getriebeeingangswelle 6 eines Schalt- oder Automatikgetriebes 4 zum Antrieb der am Fahrwerk 5 des Kraftfahrzeugs angebrachten Räder übertragen wird.

Wie bereits beschrieben worden ist, ist bei bekannten Antriebsvorrichtungen die auf der Kurbelwelle befindliche Starter/Generator-Einheit zwischen dem Verbrennungsmotor und dem Getriebe angeordnet. Eine derartige Anordnung hat jedoch eine axiale Verlängerung der gesamten Antriebsvorrichtung zur Folge, da für jedes Kilowatt Leistung der Starter/Generator-Einheit eine Verlängerung von ca. 1cm erforderlich ist. Die Verschiebung des Antriebsaggregats bei einem Längseinbau um 5-6cm nach vorne würde zudem aufgrund des hohen Motorgewichtes ein völlig neues Fahrwerk erfordern. Des weiteren müßten der vorhandene Motor und das Getriebe erheblich umkonstruiert werden. Ebenso müßten die Montagevorrichtungen, welche zum Zusammenfügen des Getriebes 4 und des Motors 1 dienen, aufgrund der Anordnung der Starter/Generator-Einheit zwischen dem Motor 1 und dem Getriebe 4 verändert und angepaßt werden, was entsprechende Kosten zur Folge hätte.

Gemäß Fig. 1 ist die elektrische Maschine 8 daher auf der dem Getriebe 4 gegenüberliegenden Seite des Verbrennungsmotors 1 angeordnet. Die elektrische Maschine 8 dient als Starter/Generator-Einheit und ermöglicht einerseits einen einfachen Start des Verbrennungsmotors 1 und andererseits eine hohe Generatorleistung, um nach dem Starten des Verbrennungsmotors 1 Energie für bestimmte Verbraucher des Kraftfahrzeugs bereitzustellen. Zu diesem Zweck umfaßt die elektrische Maschine einen auf die Kurbelwelle 2 aufgesetzten Rotor 10, welcher innerhalb einer oder mehrerer Statorwicklungen 9 drehbar angeordnet ist.

Die elektrische Maschine 8 kann beispielsweise in Form einer 42V-Asynchronmaschine mit einer Leistung von 5kW und einem Wirkungsgrad von 80% ausgestaltet sein. Ebenso ist auch die Ausgestaltung in Form einer Synchronmaschine möglich. Im Motorbetrieb übernimmt die elektrische Maschine 8 bei Betätigen des Anlasserschlüssels die Funktion eines Anlassers zum Starten des Verbrennungsmotors 1. Hierzu wird den Statorwicklungen 9 eine entsprechende Energie von einem gekühlten Wechselrichter 13 (z.B. mit Siedebadkühlung) zugeführt, der eine an ihm anliegende Gleichspannung in einen Drehstrom zum Betreiben der elektrischen Maschine 8 umsetzt, so daß der Rotor 10 mit einem Anlaufdrehmoment beaufschlagt wird, welches das Starten des Verbrennungsmotors 1 ermöglicht. Nach dem Starten des Verbrennungsmotors 1 befindet sich die elektrische Maschine 8 im Generatorbetrieb, wobei der Rotor 10 über die Kurbelwelle 2 des Verbrennungsmotors 1 in Rotation versetzt und somit in den Statorwicklungen 9 eine Spannung induziert wird, welche zur Energieversorgung von verschiedenen Verbrauchern des Kraftfahrzeuges dient. So wird u.a. die von dem Stator 9 gelieferte Spannung bzw. der entsprechende Drehstrom von dem Wechselrichter 13 in eine Versorgungsgleichspannung für das Bordnetz 18 bzw. die daran angeschlossenen Verbraucher des Kraftfahrzeugs und die Fahrzeugbatterie 19 umgewandelt.

Wie in Fig. 1 anhand des Klimakompressors 12 des Kraftfahrzeugs gezeigt ist, werden im Generatorbetrieb auch diejenigen Verbraucher von der elektrischen Maschine 8 mit elektrischer Energie versorgt, welche üblicherweise über einen sogenannten Poly-V-Riemen angetrieben werden, da erfindungsgemäß die elektrische Maschine 8 an demjenigen Ende der Kurbelwelle 2 angeordnet ist, an dem bei herkömmlichen Vorrichtungen dieser Riemen zum mechanischen Antrieb des Klimakompressors, einer Lenkhilfepumpe und in einigen Fällen auch einer Wasserpumpe, vorgesehen ist. Daher sind gemäß Fig. 1 ein elektrischer Klimakompressor 12 und eine elektrische Servolenkung 17 vorhanden, die im Generatorbetrieb über den Wechselrichter 13 betrieben werden. Durch Entfall des zuvor erwähnten Riementriebs ist ausreichend Platz für die elektrische Maschine 4 vorhanden. Voraussetzung hierfür ist jedoch, daß die üblicherweise mechanisch mit dem genannten Riemen angetriebenen Aggregate elektrifiziert, d.h. elektrisch betrieben werden, so daß auf den Riementrieb verzichtet werden kann.

Der üblicherweise zwischen dem Motor 1 und dem Getriebe 4 vorgesehene Zahnkranz und der Starter können entfallen.

Weiterhin vorhanden ist hingegen gemäß Fig. 1 ein Zahnriemen 7 für den Ventiltrieb sowie die Öl- und Wasserpumpe. Werden auch diese Aggregate elektrifiziert, kann auch der Zahnriemen 7 entfallen.

Der Stator der in Fig. 1 gezeigten elektrischen Maschine 8 besitzt eine umlaufende Wasserkühlung 16. Vorteilhafterweise kann die Energieversorgung bzw. Elektronik der elektrischen Maschine 8, d.h. der Wechselrichter 13, in den Rotor-Hohlraum der elektrischen Maschine 8 integriert werden, wodurch der benötigte Bauraum weiter reduziert wird. Zudem kann dann mit Hilfe der ohnehin vorgesehenen Wasserkühlung 16 auch der Wechselrichter 13 gekühlt werden.

Die Anordnung der elektrischen Maschine 8 auf der dem Getriebe 4 gegenüberliegenden Seite der Kurbelwelle 2 besitzt als weiteren Vorteil, daß die Abmessungen der elektrischen Maschine 8 lediglich nach unten durch die Abdeckungslinie des Motorgehäuses begrenzt ist, um ein Aufsetzen auf den Fahruntergrund zu verhindern. Auf diese Weise kann für die elektrische Maschine 8 der zur Verfügung stehende Bauraum bestmöglich ausgenutzt werden.

Insbesondere bei der in Fig. 1 gezeigten Anordnung der elektrischen Maschine 8 auf der dem Getriebe 4 gegenüberliegenden Seite der Kurbelwelle 2 können gegebenenfalls durch die somit an diesem Ende zusätzlich vorgesehene Schwungmasse des Rotors 10 Kurbelwellenschwingungen hervorgerufen werden, welche es zu vermeiden oder zu unterdrücken gilt, da ansonsten im schlimmsten Fall, d.h. im Resonanzfall, eine Zerstörung der Antriebsvorrichtung verursacht werden kann.

Daher ist gemäß Fig. 1 im freien Innenraum des Rotors 10 ein drehzahladaptiver Tilger (DAT) 11 vorgesehen, welcher eine hohe Tilgerfähigkeit besitzt. Dieser drahzahladaptive Tilger ist vorzugsweise derart ausgestaltet, daß das physikalische Prinzip von im Fliehkraftfeld aufgehängten Pendeln ausgenützt wird.

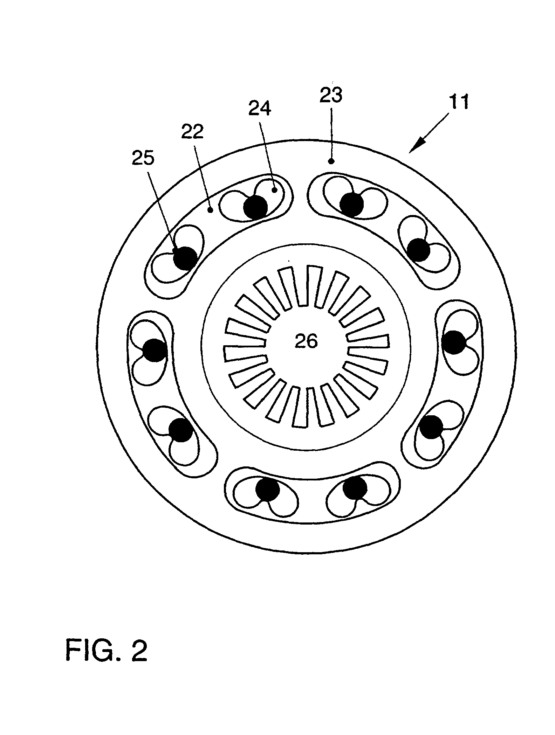

Dies soll nachfolgend näher anhand des in Fig. 2 gezeigten Ausführungsbeispiels für den drehzahladaptiven Tilger 11 erläutert werden. Gemäß diesem Ausführungsbeispiel umfaßt der drehzahladaptive Tilger 11 eine Scheibe 23, die als Träger für mehrere Tilgergewichte 22 dient, welche gleichmäßig entlang des Umfangs des Trägers 23 verteilt sind. Jedes Tilgergewicht 22 ist ebenfalls scheibenförmig ausgestaltet und über eine Bolzen-Langloch-Kombination an dem Träger 23 gleitend gelagert oder aufgehängt. Insbesondere umfaßt jedes Tilgergewicht 22 zwei seitlich voneinander beabstandete Langlöcher 24, welche derart gebogen verlaufen, daß sie in ihrem mittleren Bereich einen minimalen Abstand von dem Mittelpunkt des Träger 23 aufweisen und beideitig von diesem mittleren Bereich in radialer Richtung zum äußeren Rand des Trägers 23 hin verlaufen. Jedes Langloch 24 besitzt auf diese Weise sowohl eine Ausdehnung in Umfangsrichtung als auch in radialer Richtung des Trägers 23. Die Tilgergewichte 22 sind über an dem Träger 23 befestigte und in die Langlöcher 24 eingreifende Bolzen 25 an dem Träger 23 gleitend gelagert. Der Träger 23 besitzt in seiner Mitte eine Öffnung 26, in welche die Kurbelwelle 2 eingeführt wird.

Bei einer hohen Umdrehungsgeschwindigkeit der Kurbelwelle 2 werden die Tilgergewichte 22 durch die Fliehkraft mit ihren Langlöchern 24 entlang der entsprechenden Bolzen 25 in radialer Richtung nach außen gedrückt. Dies hat eine Verringerung der Umdrehungsgeschwindigkeit zur Folge, so daß die Tilgergewichte 22 sich wieder in radialer Richtung nach innen zurückbewegen können, was wiederum eine Erhöhung der Umdrehungsgeschwindigkeit zur Folge hat. Die einzelnen Tilgergewichte 22 führen somit eine Pendelbewegung wie ein in einem Fliehkraftfeld befindliches physikalisches Pendel aus, so daß auf diese Weise eine zuverlässige Tilgung der Drehschwingungen der Kurbelwelle 2 erfolgt.

In Fig. 1 ist zudem zur Dämpfung der Kurbelwellenschwingungen eine ringförmige Masse 20 vorgesehen, welche über eine elastische und somit federnde Gummispur im inneren Bereich des Rotors 10 aufgehängt ist.

Des weiteren kann das Prinzip eines drehzahladaptiven Tilgers 11 auch mit einer elektrischen Dämpfung der Kurbelwellenschwingungen kombiniert werden. Zu diesem Zweck überwacht oder mißt ein für weitere Anwendungen üblicherweise ohnehin auf der Nockenwelle befindlicher Drehzahlsensor 14 die Drehung bzw. Drehzahl der Kurbelwelle 2. Üblicherweise wird von dem Drehzahlsensor während des Betriebs ein sinusförmiges Signal erfaßt, welches im Resonanzfall mit Stromrippeln beaufschlagt ist. Eine Steuer- oder Regeleinheit 15 wertet eine von dem Drehzahlsensor 14 erfaßte unerwünschte Drehschwingungstendenz der Kurbelwelle 2 aus und steuert entsprechend den Wechselrichter 13 gegensinnig an, um übermäßige Kurbelwellenschwingungen zu dämpfen bzw. außer Tritt zu bringen. Die Funktion der in Fig. 1 gezeigten Regel- oder Steuereinheit 15 kann beispielsweise softwaremäßig implementiert sein.

### BEZUGSZEICHENLISTE

- 1: Verbrennungsmotor
- 2: Kurbelwelle
- 3: Getriebekupplung
- 4: Getriebe
- 5: Fahrwerk
- 6: Getriebeeingangswelle
- 7: Zahnriemen
- 8: Starter/Generator-Einheit
- 9: Stator
- 10: Rotor
- 11: Drehzahladaptiver Tilger
- 12: Elektrischer Klimakompressor
- 13: Wechselrichter
- 14: Drehzahlsensor
- 15: Wechselrichter-Regler
- 16: Wasserkühlung
- 17: Elektrische Servolenkung
- 18: Bordnetz
- 19: Fahrzeugbatterie
- 20: Dämpfungsmasse
- 21: Gummispur
- 22: Tilgergewicht
- 23: Träger
- 24: Langloch
- 25: Bolzen
- 26: Öffnung

## Patentansprüche

1. Antriebsvorrichtung, mit einem Antriebsaggregat (1), und mit einer elektrischen Maschine (8), welche mindestens einen Stator (9) und mindestens einen auf einer durch das Antriebsaggregat (1) verlaufenden Antriebswelle (2) angeordneten Rotor (10) umfaßt, wobei an der Antriebswelle (2) im inneren Bereich des Rotors (10) ein Tilgersystem (11) angeordnet ist, **dadurch gekennzeichnet, daß** das Tilgersystem (11) ein drehzahladaptives Tilgersystem ist.

2. Antriebsvorrichtung nach Ansprucn 1, **dadurch gekennzeichnet, daß** das drehzahladaptive Tilgersystem (11) mehrere nach dem physikalischen Prinzip eines Pendels im Fliehkraftfeld gleitend gelagerte Tilgergewichte (22) umfaßt.

3. Antriebsvorrichtung nach Anspruch 1 oder 2, **dadurch gekennzeichnet, daß** das drehzahladaptive Tilgersystem (11) mehrere an einem gemeinsamen Träger (23) in radialer Richtung der Kurbelwelle (2) gleitend gelagerte Tilgergewichte (22) umfaßt, wobei der Träger (23) im inneren Bereich des Rotors (10) auf der Kurbelwelle (2) angeordnet ist.

4. Antriebsvorrichtung nach Anspruch 3, **dadurch gekennzeichnet, daß** die Tilgergewichte (22) an dem gemeinsamen Träger (23) in Umfangsrichtung des Trägers (23) verteilt angeordnet sind.

5. Antriebsvorrichtung nach Anspruch 3 oder 4, **dadurch gekennzeichnet, daß** jedes Tilgergewicht (22) über wenigstens einen Bolzen (25) an dem Träger (23) gleitend gelagert ist, welcher in ein entsprechendes Langloch (24) hineinragt, wobei sich jedes Langloch (24) sowohl in Umfangsrichtung als auch in radialer Richtung des Trägers (23) erstreckt.

6. Antriebsvorrichtung nach Anspruch 5, **dadurch gekennzeichnet, daß** jedes Tilgergewicht (22) zwei in Längsrichtung des entsprechenden Tilgergewichts (22) voneinander beabstandete Langlöcher (24) aufweist, in die jeweils ein mit dem Träger (23) verbundener Bolzen (25) hineinragt.

7. Antriebsvorrichtung nach Anspruch 5 oder 6, **dadurch gekennzeichnet, daß** jedes Langloch (24) in seinem mittleren Bereich einen minimalen Abstand von der Kurbelwelle (2) aufweist und derart ausgestaltet ist, daß es sich beidseitig von diesem mittleren Bereich in radialer Richtung nach außen erstreckt.

8. Antriebsvorrichtung nach einem der vorhergehenden Ansprüche, **dadurch gekennzeichnet, daß** an der Antriebswelle (2) im inneren Bereich des Rotors (10) zusätzlich eine drehschwingungsdämpfende ringförmige Masse (20) angeordnet ist, welche über ein elastisches Mittel (21) an der Kurbelwelle (2) angebracht ist.

9. Antriebsvorrichtung nach einem der vorhergehenden Ansprüche, **dadurch gekennzeichnet,** da**ß** die elektrische Maschine (8) an der Antriebswelle (2) auf der der Abtriebsseite gegenüberliegenden Seite des Antriebsaggregats (1) angeordnet ist.

10. Antriebsvorrichtung nach einem der vorhergehenden Ansprüche, **dadurch gekennzeichnet, daß** das Antriebsaggregat (1) ein Verbrennungsmotor (1) und die Antriebswelle (2) eine Kurbelwelle des Verbrennungsmotors (1) ist, und daß die elektrische Maschine (8) als Starter/Generator-Einheit ausgestaltet ist, welcher in einem ersten Betriebsmodus Energie zum Starten des Antriebsaggregats (1) zugeführt wird und welche in einem zweiten Betriebsmodus nach dem Starten des Antriebsaggregats (1) selber Energie zur Energieversorgung mindestens eines elektrischen Verbrauchers (12, 17, 18) liefert.

11. Antriebsvorrichtung nach einem der vorhergehenden Ansprüche, **dadurch gekennzeichnet, daß** Überwachungsmittel (14) zum Überwachen der Drehung der Antriebswelle (2) und Mittel (15) zum Regeln der elektrischen Maschine (8) in Abhängigkeit von der Gleichförmigkeit der Drehung der Antriebswelle (2) vorgesehen sind.

## Claims

1. Drive device having a drive assembly (1) and having an electric machine (8) which comprises at least one stator (9) and at least one rotor (10) which is arranged on a drive shaft (2) which runs through the drive assembly (1), an absorber system (11) being arranged on the drive shaft (2) in the internal region of the rotor (10), **characterized in that** the absorber system (11) is an absorber system which is adapted with respect to the rotation of speed.

2. Drive device according to Claim 1, **characterized in that** the absorber system (11) which is adaptive with respect to the rotational speed comprises a plurality of absorber weights (22) which are mounted so as to slide according to the physical principle of a pendulum in the field of centrifugal force.

3. Drive device according to Claim 1 or 2, **characterized in that** the absorber system (11) which is adaptive with respect to rotational speed comprises a plurality of absorber weights (22) which are mounted on a common carrier (23) so as to slide in the radial direction of the crankshaft (2), the carrier (23) being arranged in the internal region of the rotor (10) on the crankshaft (2).

4. Drive device according to Claim 3, **characterized in that** the absorber weights (22) are arranged on a common carrier (23), distributed in the circumferential direction of the carrier (23).

5. Drive device according to Claim 3 or 4, **characterized in that** each absorber weight (22) is mounted on the carrier (23) so as to slide by means of at least one bolt (25) into a corresponding elongated hole (24), each elongated hole (24) extending both in the circumferential and radial directions of the carrier (23).

6. Drive device according to Claim 5, **characterized in that** each absorber weight (22) has two elongated holes (24) which are spaced apart from one another in the longitudinal direction of the respective absorber weight (22) and into each of which a bolt (25) which is connected to the carrier (23) projects.

7. Drive device according to Claim 5 or 6, **characterized in that** each elongated hole (24) is, at its central region, at a minimum distance from the crankshaft (2) and is configured in such a way that it extends outwards in the radial direction on both sides of this central region.

8. Drive device according to one of the preceding claims, **characterized in that** in addition an annular mass (20) which damps rotary oscillations and is mounted on the crankshaft (2) using an elastic means (21) is arranged on the drive shaft (2), in the internal region of the rotor (10).

9. Drive device according to one of the preceding claims, **characterized in that** the electric machine (8) is arranged on the drive shaft (2) on the side of the drive assembly (1) which is opposite the output side.

10. Drive device according to one of the preceding claims, **characterized in that** the drive assembly (1) is an internal combustion engine (1) and the drive shaft (2) is a crankshaft of the internal combustion engine (1), and **in that** the electric machine (8) is configured as a starter/generator unit to which energy for starting the drive assembly (1) is fed in a first operating mode, and which, in a second operating mode after the drive assembly (1) starts, supplies the same energy in order to supply energy to at least one electrical load (12, 17, 18).

11. Drive device according to one of the preceding claims, **characterized in that** monitoring means (14) for monitoring the rotation of the drive shaft (2) and means (15) for regulating the electric machine (8) are provided as a function of the uniformity of the rotation of the drive shaft (2).

## Revendications

1. Dispositif d'entraînement, comprenant une unité d'entraînement (1) et une machine électrique (8), qui comprend au moins un stator (9) et au moins un rotor (10) disposé sur un arbre d'entraînement (2) s'étendant à travers l'unité d'entraînement (1), un système d'amortisseur (11) étant disposé sur l'arbre d'entraînement (2) dans la partie intérieure du rotor (10), **caractérisé en ce que** le système d'amortisseur (11) est un système d'amortisseur adapté à la vitesse de rotation.

2. Dispositif d'entraînement selon la revendication 1, **caractérisé en ce que** le système d'amortisseur (11) adapté à la vitesse de rotation comprend plusieurs poids d'amortissement (22) montés à coulissement dans le champ de la force centrifuge selon le principe physique d'un pendule.

3. Dispositif d'entraînement selon la revendication 1 ou 2, **caractérisé en ce que** le système d'amortisseur (11) adapté à la vitesse de rotation comprend plusieurs poids d'amortissement (22) montés à coulissement sur un support commun (23) dans la direction radiale du vilebrequin (2), le support (23) étant disposé dans la partie intérieure du rotor (10) sur le vilebrequin (2).

4. Dispositif d'entraînement selon la revendication 3, **caractérisé en ce que** les poids d'amortissement (22) sont répartis sur le support commun (23) dans la direction périphérique du support (23).

5. Dispositif d'entraînement selon la revendication 3 ou 4, **caractérisé en ce que** chaque poids d'amortissement (22) est monté à coulissement sur le support (23) par le biais d'au moins un boulon (25), qui pénètre dans un trou oblong correspondant (24), chaque trou oblong (24) s'étendant à la fois dans la direction périphérique et dans la direction radiale du support (23).

6. Dispositif d'entraînement selon la revendication 5, **caractérisé en ce que** chaque poids d'amortissement (22) présente deux trous oblongs (24) espacés l'un de l'autre dans la direction longitudinale du poids d'amortissement correspondant (22), dans lesquels pénètre à chaque fois un boulon (25) connecté au support (23).

7. Dispositif d'entraînement selon la revendication 5 ou 6, **caractérisé en ce que** chaque trou oblong (24) présente une distance minimale du vilebrequin (2) dans sa région centrale et est configuré de telle sorte qu'il s'étende vers l'extérieur de part et d'autre de cette région centrale dans la direction radiale.

8. Dispositif d'entraînement selon l'une quelconque des revendications précédentes, **caractérisé en ce qu'**une masse annulaire (20) amortissant les oscillations de rotation est en outre disposée sur l'arbre d'entraînement (2) dans la partie intérieure du rotor (10), laquelle est montée par le biais d'un moyen élastique (21) sur le vilebrequin (2).

9. Dispositif d'entraînement selon l'une quelconque des revendications précédentes, **caractérisé en ce que** la machine électrique (8) est disposée sur l'arbre d'entraînement (2) du côté de l'unité d'entraînement (1) opposé au côté de sortie.

10. Dispositif d'entraînement selon l'une quelconque des revendications précédentes, **caractérisé en ce que** l'unité d'entraînement (1) est un moteur à combustion interne (1) et l'arbre d'entraînement (2) est un vilebrequin du moteur à combustion interne (1), et **en ce que** la machine électrique (8) est réalisée sous la forme d'une unité starter/générateur, à laquelle de l'énergie est alimentée dans un premier mode de fonctionnement pour faire démarrer l'unité d'entraînement (1) et qui fournit dans un deuxième mode de fonctionnement après le démarrage de l'unité d'entraînement (1) elle-même de l'énergie pour l'alimentation en énergie d'au moins un consommateur électrique (12, 17, 18).

11. Dispositif d'entraînement selon l'une quelconque des revendications précédentes, **caractérisé en ce que** des moyens de surveillance (14) pour la surveillance de la rotation de l'arbre d'entraînement (2) et des moyens (15) pour la régulation de la machine électrique (8) en fonction de l'uniformité de la rotation de l'arbre d'entraînement (2) sont prévus.
